# FASCICULE DE BREVET EUROPEEN

(11) **EP 1 299 611 B1**
(45) Date de publication et mention de la délivrance du brevet: **21.06.2006**
(21) Numéro de dépôt: 01969308.4
(22) Date de dépôt: 21.06.2001
(51) Int. Cl.: E05F 11/38, E05F 11/48

(54) **VITRAGE MOBILE PRE-AJUSTE EN POSITION**
VORPOSITIONIERUNG EINER BEWEGLICHEN SCHEIBE
MOBILE GLAZING PRE-ADJUSTED IN POSITION

(30) Priorité: 23.06.2000 BE 200000405
(43) Date de publication de la demande: 09.04.2003
(73) Titulaire: GLAVERBEL, 1170 Bruxelles (Watermael-Boitsfort) (BE)
(72) Inventeur: LEGRAND, Denis, B-6040 Jumet (BE); MALLIA, Carmelo, B-6040 Jumet (BE); VAN LYSEBETTENS, Marc, B-6040 Jumet (BE)
(74) Mandataire: Le Vaguerèse, Sylvain Jacques
(86) Numéro de dépôt international: PCT/EP2001/007066
(87) Numéro de publication internationale: WO 2001/098613

(56) Documents cités:
- FR-A- 2 762 350

## Description

La présente invention concerne les vitrages mobiles et notamment les vitrages automobiles auxquels par commodité il est fait référence dans la suite de la description.

Les vitrages mobiles des véhicules doivent satisfaire à des exigences de formes et de dimensions très précises, ceci pour qu'ils puissent s'ajuster très exactement au logement correspondant délimité dans le, ou les éléments de carrosserie au contact desquels ils se trouvent. Les vitrages mobiles sont essentiellement logés dans des éléments de carrosserie portières, hayons, eux mêmes mobiles par rapport au reste de la carrosserie. L'ajustement de ces éléments les uns par rapport aux autres est nécessaire, notamment pour garantir une parfaite étanchéité de l'habitacle lorsque tous ces éléments sont en position "fermée", mais aussi éventuellement pour éviter des frottements excessifs sur les lèvres ou joints d'étanchéité qui risqueraient de détériorer ces derniers et/ou de forcer les mécanismes assurant la mobilité des vitrages.

En dépit des précautions prises pour garantir la parfaite reproduction des formes et dimensions, les fabrications industrielles peuvent connaître quelques variations qui disqualifient les produits au regard des tolérances rigoureuses imposées par les constructeurs. La difficulté est d'autant plus grande que les vitrages sont de dimensions plus importantes et leurs formes plus complexes. En particulier les vitrages latéraux des portières sont de plus en plus cintrés ou bombés, et les techniques de production de ces vitrages font que le respect des tolérances de formes est difficile à assurer.

Lorsque le vitrage vient s'insérer dans un cadre en contact avec la carrosserie, le guidage continu dans la glissière adéquate, munie normalement de joints d'étanchéité permet dans une certaine mesure de "rattraper" quelques variations dans la forme ou dans les dimensions. La question se pose différemment pour les vitrages qui ne sont pas encadrés. C'est le cas notamment de certains vitrages de véhicules type "cabriolet". Dans ces véhicules le vitrage est seulement maintenu depuis la portière dans laquelle il se loge. En position relevée la partie supérieure du vitrage n'est pas maintenue, si ce n'est par le joint d'étanchéité porté par le toit, ou le montant latéral du pare-brise. Le positionnement précis des vitrages par rapport à ces autres parties du véhicule est d'autant plus nécessaire que lorsque le véhicule est en mouvement les effets aérodynamiques peuvent exercer une certaine dépression sur la face externe de ces vitrages, dépression qui tend à écarter le vitrage de son appui sur les joints d'étanchéité.

A titre indicatif, les demandes des constructeurs limitent les écarts tolérables par rapport aux caractéristiques dimensionnelles dans une direction sensiblement normale à la surface du vitrage, à moins de 0,2mm.

L'invention a pour but de fournir des moyens permettant d'éviter de disqualifier une part significative de la production, faute d'avoir pu parfaitement maîtriser ces caractéristiques de forme.

Dans la pratique les producteurs de vitrages sont conduits, à la demande des constructeurs, à intégrer de plus en plus d'éléments fonctionnels aux produits livrés. Il s'agit des couches de toutes natures (anti-solaire, chauffante, anti-réfléchissante, hydrophobe...), des revêtements tels les émaux de masquage, mais aussi des moyens électroniques ou mécaniques tels que des capteurs, des joints profilés....Dans ce sens, les vitrages mobiles sont couramment livrés avec des éléments coopérant avec ceux de l'ensemble mécanique assurant leur mobilité. C'est le cas en particulier des étriers ou des platines sur lesquels viennent se fixer les éléments entraînant le mouvement de ces vitrages. Il s'agit de pièces situées sur le bord inférieur du vitrage et qui sont le plus souvent collées à ce dernier. Les étriers et platines peuvent aussi se fixer au vitrage par des moyens éventuellement rapportés, et qui coopèrent avec des ouvertures pratiquées dans l'épaisseur du vitrage à proximité de son bord inférieur.

Dans tous les cas le, ou les étriers ou platines dont le vitrage est équipé, sont solidement fixés pour supporter les efforts liés au mouvement du vitrage. Ces étriers et platines sont constitués dans des matériaux résistants et rigides.

Dans la suite pour éviter la répétition il est fait référence aux étriers. La description s'applique également aux platines sauf dispositions spécifiques qui sont alors indiquées.

Le positionnement des vitrages mobiles est le résultat de la combinaison des effets de plusieurs éléments. Quel que soit le vitrage mobile, il est maintenu depuis sa partie inférieure, par les étriers coopérant avec des curseurs mobiles dans des glissières fixées elles mêmes à la carrosserie. En position haute, le vitrage peut s'insérer dans un cadre. Pour les cabriolets ce cadre est absent, et le maintien du vitrage est donc très limité, l'appui sur les lèvres d'étanchéité de la portière n'ayant pratiquement pas d'effet sur le positionnement précis du vitrage. Il est donc de la plus grande importance que les moyens reliant les glissières au vitrage confèrent à celui-ci une position exempte de variations.

Pour les raisons tenant aux techniques de fabrication évoquées précédemment, les vitrages présentent des écarts de forme qui peuvent occasionner un mauvais positionnement à l'extrémité du vitrage la plus éloignée des points de fixation aux étriers. Il est toujours possible lors du montage du vitrage de procéder à un réglage précis tel que celui-ci, indépendamment des écarts indiqués, se positionne convenablement par rapport aux éléments de carrosserie. Un tel réglage sur les lignes d'assemblage est mal aisé et relativement long. Pour cette raison, les constructeurs renforcent leurs exigences auprès des fournisseurs de vitrages, pour s'épargner ces contraintes d'ajustement.

La question du réglage angulaire d'une vitre est envisagée dans la publication FR 2762350. Dans ce document, le vitrage dispose d'une certaine latitude dans sa fixation au support qui lui est associé sans préciser comment ces deux eléments sont solidarisés dans la position adéquate.

Partant de ces constatations, les inventeurs ont eu l'idée de compenser les légères variations de forme du vitrage proprement dit, et en particulier les variations de courbure, en dotant les vitrages d'éléments de fixation tels que des étriers, ou des platines, fixés de façon rigide sur le bord du vitrage, et dont la géométrie, et / ou la disposition relative par rapport au vitrage, est ajustée pour satisfaire aussi exactement que possible aux caractéristiques nominales de l'ensemble étrier(platine)-vitrage. En d'autres termes, les écarts inévitables sur les vitrages sont «compensés» par un ajustement de la géométrie de l'ensemble étrier(platine)-vitrage.

De manière plus précise l'invention permet de régler exactement la position du vitrage dans une direction essentiellement normale à la face du vitrage concemé, à partir de la seule fixation bien déterminée.

Selon l'invention le réglage de la position du vitrage est obtenue en fixant l'étrier (platine) de façon rigide et en ajustant la partie de cet étrier (platine) constituant l'appui de fixation aux moyens de mobilisation du vitrage aux cotes nominales.

L'invention est décrite de manière détaillée dans la suite de la description en faisant référence aux planches de dessins dans lesquelles:
- la figure 1 est une vue schématique d'un ensemble de fixation et de levage d'un vitrage mobile d'une portière de véhicule ;
- la figure 2 est une vue en coupe schématique de côté, de la disposition d'un vitrage dans un élément de carrosserie;
- la figure 3 représente schématiquement un vitrage disposé sur un banc de contrôle et d'ajustement;
- la figure 4 présente un détail agrandi, de l'appareillage attaché au banc de la figure 3 ;
- la figure 5 représente un étrier du type de ceux utilisés selon l'invention pour ajuster les caractéristiques de positionnement des vitrages mobiles, en vue de face;
- la figure 6 est la vue de coté correspondant à la figure 3, en coupe selon A-A;
- la figure 7 représente en vue partielle en coupe, un mode de réalisation d'un étrier portant des moyens de réglage selon l'invention;
- les figures 8a et 8b représentent un autre mode de réalisation d'un étrier portant des moyens de réglage selon l'invention;
- la figure 9 représente un autre mode de réalisation d'un étrier portant des moyens de réglage selon l'invention;
- la figure 10 représente de façon schématique un mode de fixation dans lequel l'étrier est remplacé par une fixation au moyen d'une platine ;
- la figure 11 est un autre mode de réalisation d'un étrier selon l'invention.

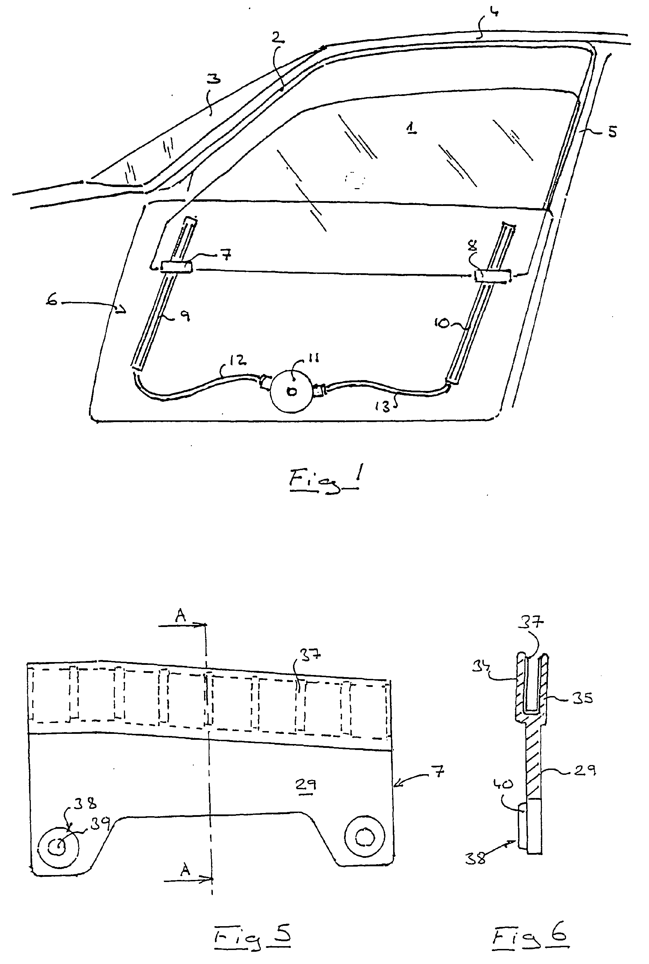

La figure 1 présente de manière schématique une portière 6 de véhicule, face avant enlevée pour visualiser les principaux éléments de fixation et de levage d'une vitrage mobile 1. Dans ce mode le vitrage n'est pas encadré. En position relevée ses bords libres viennent s'appliquer sur les joints d'étanchéité garnissant le montant latéral 2 supportant le pare-brise 3, l'élément formant le toit du véhicule 4, et le montant latéral 5. Le maintien contre ces joints d'étanchéité est en légère pression sur ceux-ci, et résulte seulement du positionnement précis du vitrage par rapport aux autres éléments.

Dans les véhicules de type cabriolet, le joint de toit est solidaire de la capote escamotable. Le montant latéral 5, est également escamotable. Il est le plus souvent porté directement par le vitrage constituant le vitrage latéral arrière, qui s'efface par basculement dans le châssis.

La figure 1. présente le vitrage en position partiellement abaissée. Dans cette position, on voit que le vitrage n'est plus « maintenu » au contact des joints portés par le montant latéral 2 et par le toit 4.

Le vitrage 1 est maintenu en position depuis la portière 6, par l'intermédiaire des étriers 7 et 8, fixés, ou solidaires, de curseurs mobiles non représentés, dans des glissières 9 et 10. Les glissières sont fixées de manière rigide à la structure de la carrosserie. Au passage de la partie supérieure de la structure de la portière 6, le vitrage est au contact de lèvres d'étanchéité non représentées. Ces lèvres, en matériau facilement déformable, ne contribuent pratiquement pas au positionnement du vitrage.

Des moyens de levage traditionnels (moteur 11 ; câbles 12 et 13) sont schématisés. Ils permettent le déplacement simultané des curseurs dans les glissières 9 et 10.

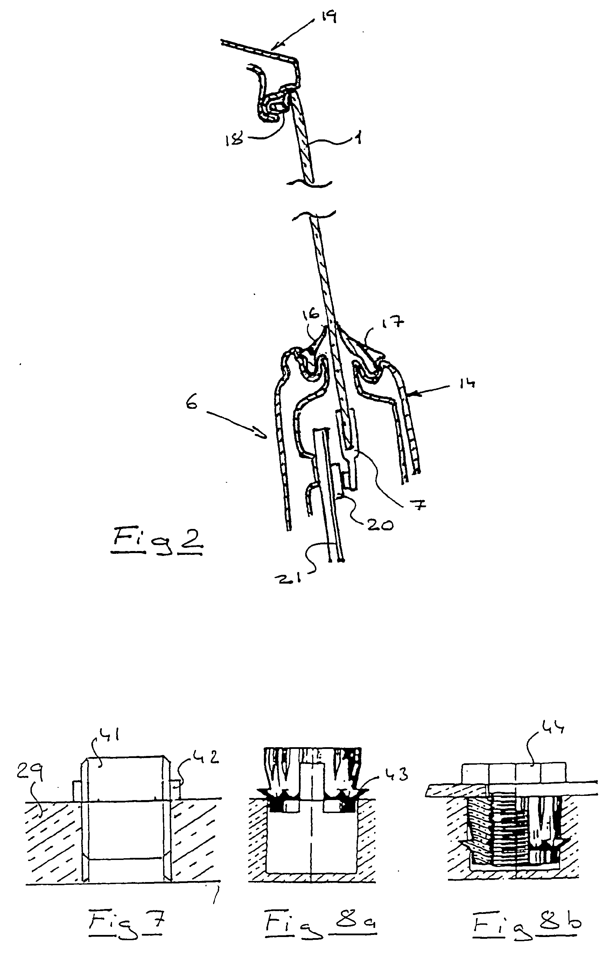

La figure 2 présente en vue de côté schématiquement un montage usuel du type de la figure 1, d'un vitrage 1 mobile dans une portière 6. Les parois 14 et 15 formant la structure de la portière ménagent une ouverture à la partie supérieure, dans laquelle passe le vitrage 1. Des lèvres d'étanchéité 16 et 17, s'appliquent de façon souple sur le vitrage. En position relevée, le bord supérieur du vitrage vient en appui sur un joint d'étanchéité 18 inséré dans l'élément 19, faisant partie du toit du véhicule.
L'étrier 7 maintient le vitrage 1 de manière rigide. Il est lui même fixé à, ou solidaire d'un curseur 20, mobile dans un profilé 21 formant glissière. Le profilé 21 est fixé à la structure de la portière de façon traditionnelle.

Dans les constructions présentées aux figures 1 et 2, on voit que le vitrage n'est positionné par rapport aux autres éléments du véhicule, que par l'intermédiaire de l'étrier 7. Les lèvres 16 et 17, sont suffisamment souples pour ne pas introduire de frottement trop important sur le vitrage lorsqu'il est relevé ou abaissé. Aussi leur action sur le vitrage est négligeable. On comprend que, le bord supérieur du vitrage devant se positionner de façon étanche contre le joint 18, il est impératif d'avoir une position rigoureuse à partir de son bord inférieur. Si la géométrie du vitrage est insuffisamment précise, un assemblage rigoureux des éléments profilés 21, curseur mobile 20, étrier 7 et vitrage 1, ne permettra pas un positionnement satisfaisant.

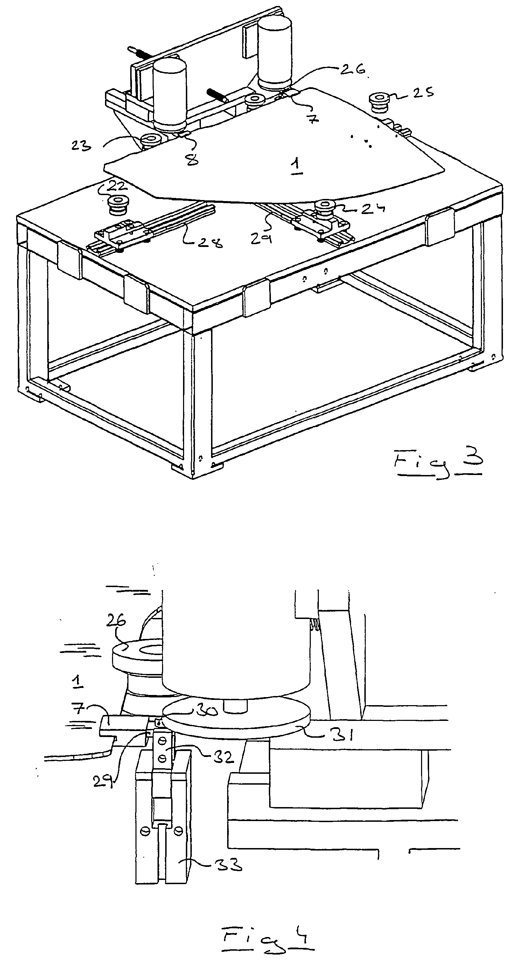

La figure 3 montre le vitrage 1 muni de deux étriers 7 et 8. Le vitrage est placé sur un banc de contrôle et d'ajustement, de telle sorte que cet ensemble corresponde exactement aux cotes du constructeur. Dans le mode représenté, le vitrage repose sur des chandelles réglables par rapport au bâti du banc. L'extrémité des chandelles au contact du verre est pourvue d'une bille facilitant la mise en place. Les chandelles situées sous le vitrage ne sont pas représentées. Le vitrage est maintenu en position par des butées 22, 23, 24, 25, 26, réglables pour correspondre exactement au gabarit nominal du vitrage. Les butées servent également de fixation du vitrage pour maintenir celui-ci en position précise pendant l'opération d'ajustement aux cotes requises. Pour faciliter la mise en place du vitrage 1 par rapport aux butées, ces dernières peuvent être montées coulissantes dans des glissières 28, 29.

Dans la forme présentée à la figure 3, les étriers 7 et 8, sont préalablement fixés au vitrage 1 de façon rigide. Cette fixation, comme décrit plus loin, est généralement obtenue par une adaptation de la gorge de l'étrier, et l'utilisation de moyens d'interface, notamment d'une colle, qui solidarise l'étrier au vitrage.

La figure 3 présente aussi l'ensemble mobile portant les outils destinés à réaliser l'ajustement proposé par l'invention.

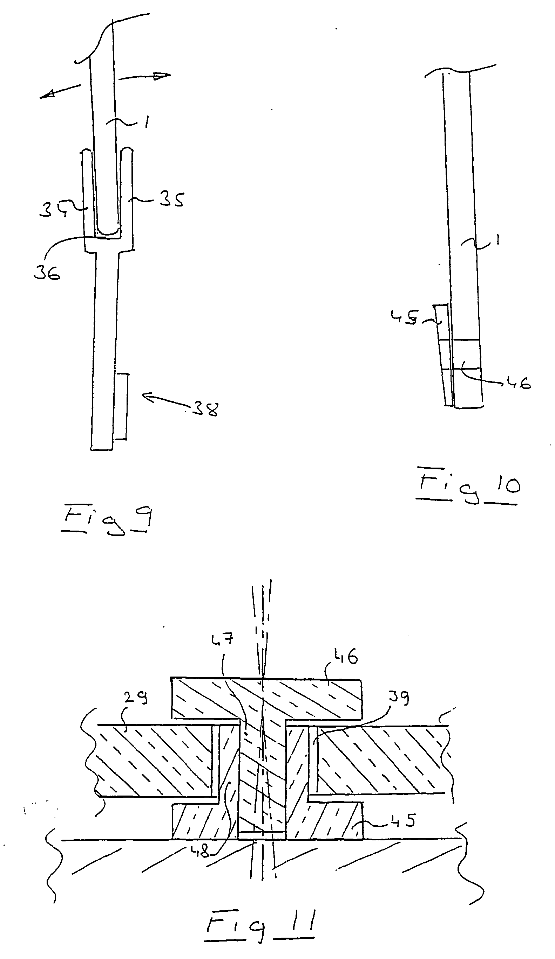

La figure 4 montre une manière d'ajustement de la géométrie d'ensemble vitrage-étrier, par une modification de la géométrie de l'étrier décrit ci-après à propos de la figure 5.

La figure 4 correspond à un détail du banc présenté à la figure 3. Sur cette figure, le vitrage 1, positionné très précisément par rapport aux butées du banc, telle que la butée 26, porte un étrier 7 rigidement fixées au vitrage. L'étrier comporte également une patte de fixation 29. Cette patte comporte des éléments de fixation dont les dimensions sont réglables. Dans la forme présentée il s'agit de bossages 30, qui constituent une sur-épaisseur par rapport à la patte 29.

Le mode de réglage pour ce type d'étrier consiste, partant des bossages 30, systématiquement d'épaisseur supérieure à la valeur conduisant aux cotes souhaitées, à ajuster cette épaisseur et la face d'appui dans le plan souhaité, par exemple par meulage précis.

La figure 4 montre un ensemble permettant de conduire à bien cette opération de meulage. La meule 31, mobile en translation, vient recréer la face d'appui en réduisant le bossage 30 à l'épaisseur et à la forme voulues. Pour obtenir des dimensions rigoureuses, la patte 29 de l'étrier 7 est maintenue fermement dans des mâchoires 32 d'un étau 33. De cette façon on évite les vibrations que peut engendrer le meulage entrepris.

Les figures 5 et 6 montrent de façon plus détaillée, un exemple d'étrier utilisé selon l'invention. Dans sa partie supérieure l'étrier comprend deux parois 34 et 35, délimitant une gorge 36, de largeur sensiblement égale à l'épaisseur du vitrage 1, de telle sorte que l'introduction du bord inférieur du vitrage se fasse avec une légère friction sur les parois. Pour obtenir une fixation parfaitement stable, la friction des parois 34 et 35 sur le vitrage est habituellement insuffisante. On peut utiliser des moyens mécaniques coopérant avec la feuille de verre tels que des écrous, vis ou analogues. A ces moyens, qui nécessitent le façonnage du verre, on préfère en général l'usage de colles appropriées.

La structure de l'étrier représenté est particulièrement adaptée à l'usage d'une colle. Les faces des parois 34 et 35 formant la gorge 36, sont pourvues de nervures verticales 37 faisant saillie dans la gorge. Ces nervures 37, de faible épaisseur permettent l'introduction de la feuille après nappage de la gorge ou de la feuille, avec la colle choisie. La mise en place de l'étrier ne compromet pas la distribution de la colle sur la face du vitrage. L'excédent éventuel de colle est simplement chassé sans gêner la mise en place de l'étrier sur la feuille de verre jusqu'à correspondre exactement au positionnement requis.

L'étrier se prolonge par une patte 29 destinée à s'articuler aux moyens de levage. La patte 29 est généralement constituée d'une plaque comportant au moins un point de fixation 38. Dans la forme présentée aux figure 5 et 6, les points de fixation correspondent à des alésages cylindriques 39 traversant la patte 29 et les bossages 40 disposés à ces emplacements pour renforcer l'articulation. L'articulation avec les moyens de levage est obtenue de façon traditionnelle par des rivets, goupilles, vis... adaptés aux dimensions des alésages 39.

Le plus souvent le mécanisme de levage, qu'il soit mécanique ou motorisé, associe une glissière à un curseur mobile entraîné au moyen d'un câble ou d'un ruban rigide. Le curseur qui coulisse sur la glissière, est rendu solidaire de avec l'étrier.

Le réglage de la position selon l'invention comporte l'adaptation de la position relative de l'étrier par rapport aux moyens d'entraînement de type curseur. La positon de ces derniers est parfaitement déterminée par rapport à la structure de la portière sur laquelle ils sont fixés. L'ajustement selon l'invention consiste à faire en sorte de modifier, en tant que de besoin, la distance axiale entre la patte de l'étrier, et l'appui des moyens de levage (le curseur par exemple) sur cette patte.

Dans la forme représentée aux figures 5 et 6, cela correspond au réglage de l'épaisseur du bossage 40, par exemple comme il a été indiqué à propos des figures 3 et 4, par un meulage approprié.

Ce type d'adaptation convient bien aux étriers formés de façon traditionnelle le plus souvent dans des matériaux plastiques rigides tels que des polyamides, matériaux qui se travaillent sans difficulté. Les matériaux métalliques conviennent également bien mais sont moins usuels pour constituer des étriers.

Dans la pratique il est clair que le réglage effectué sur l'étrier pourrait l'être sur l'élément correspondant sur lequel il vient se fixer (le curseur). Le choix de procéder au réglage sur l'étrier vient de ce que, comme indiqué dans le préambule, les vitrages sont généralement équipés de ces étriers directement par les fabricants de produits verriers, et que le contrôle de conformité est conduit sur l'ensemble "vitrage-étrier". Les produits fournis au constructeur sont ainsi parfaitement ajustés, et ne nécessitent plus de réglage au moment du montage dans la portière.

Le réglage de la position de l'étrier par rapport au curseur peut être obtenu de multiples manières dans lesquelles le bossage 40 des figures 5 et 6, est remplacé par un élément rapporté sur l'étrier. Les figures 7 à 11 illustrent divers modes de réalisation pour obtenir le réglage par une pièce rapportée.

La figure 7 montre l'utilisation d'un insert dans la patte 29 de l'étrier. Dans la forme présentée, l'insert est constitué d'un manchon cylindrique 41 fileté sur sa face externe. Le manchon est introduit dans le trou taraudé correspondant pratiqué dans la patte 29 de l'étrier. Le vissage du manchon 41dans la patte 29 permet d'ajuster la hauteur du manchon formant bossage sur la patte. Le blocage en position du manchon peut être obtenu par tous les moyens usuels à ce type d'assemblage, et en particulier au moyen d'un contre-écrou 42, vissé sur le manchon 41, et venant en butée sur la patte 29.

Le manchon fileté 41 peut être muni d'une collerette formant platine pour accroître l'appui offert aux moyens de fixation.

L'insert peut prendre de multiples formes. Un autre exemple consiste en des éléments déformables tels que celui représenté aux figures 8a et 8b. La mise en place de ce type d'insert dans le trou de la patte 29, est suivi par l'écartement des éléments d'ancrage 43, pénétrant dans le matériau constituant la patte. Cet ancrage peut être obtenu par introduction d'un élément fileté dans la partie correspondante de l'insert. Dans la forme présentée, il s'agit d'un boulon 44.

Les inserts peuvent encore être fixés par collage ou soudure de manchons de matériaux convenablement choisis. C'est en particulier le cas d'inserts constitués de matériaux plastiques qui peuvent être de même nature que l'étrier, ou de nature différente.

La figure 11 constitue une variante dans laquelle l'insert n'est pas ajusté à l'alésage 39 de la patte 29. La coupe montre que la platine 45 qui s'accouple avec la platine complémentaire 46 par emboîtement de la tige cylindrique 47 dans le manchon 48, laisse un jeu dans l'alésage 39. Ce jeu permet un certain débattement de l'ensemble des deux platines 45, 46 assemblées comme il est montré. Ce jeu permet une inclinaison de cet ensemble par rapport à l'axe de l'alésage.

L'utilisation de l'ensemble présenté à la figure 11 comprend la mise en place sur le gabarit de la feuille avec les étriers. Simultanément la platine 45 est mise en position fixe sur le gabarit. Dans ces conditions les irrégularités de forme du vitrage se traduisent par une inclinaison variable de l'axe du manchon 48 par rapport à celui de l'alésage 39. L'ensemble est collé dans la position imposée par les pièces en place sur le gabarit assurant un positionnement parfait. La colle est du type « hot melt » ou colle à prise rapide pour limiter le temps d'immobilisation de du vitrage sur le gabarit.

Dans les exemples précédents, la position des étriers par rapport à la feuille de verre est déterminée de manière précise par la forme des étriers. Ceux-ci sont ajustés de telle sorte que la gorge dans laquelle le vitrage est inséré corresponde aussi précisément que possible à l'épaisseur du vitrage. L'utilisation d'une colle est destinée à solidariser de façon permanente l'étrier à la feuille de verre, dans la position que leur conformation détermine.

Un autre mode de réalisation de l'invention consiste à rattraper les écarts de forme du vitrage par une modification du positionnement de l'étrier par rapport à ce vitrage. La figure 9 montre, en amplifiant les variations possibles pour plus de clarté, cette façon de mettre en oeuvre l'invention.

Dans cette forme la gorge 36 est de largeur légèrement plus grande que l'épaisseur du vitrage. Ceci permet un léger jeu de l'étrier dans la direction normale au vitrage, mouvement qui est schématisé par les flèches de part et d'autre du vitrage. Cet autre mode de réalisation de l'invention consiste, après avoir établi la position convenable de l'étrier et du vitrage, par un déplacement relatif de l'un à l'autre comme indiqué, de faire en sorte de conserver cette position de façon permanente par des moyens appropriés.

Le maintien des positions ajustées est obtenu notamment au moyen d'une colle. Dans la pratique le collage sur le vitrage, notamment des étriers de levage, est réalisé au moyen de colles qui, outre une parfaite adhérence au verre, offrent toutes les garanties de résistance à la chaleur et au vieillissement dans les conditions normales d'utilisation. Le plus fréquemment ces colles ont pour inconvénient de nécessiter un temps de prise relativement long, de plusieurs heures ou même de plusieurs jours. Il n'est pas envisageable de maintenir les vitrages et les étriers, sur un banc déterminant rigoureusement leurs positions respectives, pendant toute cette période de durcissement de la colle.

Pour faciliter ces collages, les inventeurs proposent de procéder avec au moins deux types de colles. Les colles traditionnelles garantes des performances souhaitées sont toujours utilisées, mais en outre, une deuxième sorte de colle est utilisée de façon discrète, pour assurer temporairement au moins, la position convenable de l'étrier par rapport au vitrage.

Dans la pratique le maintien en position de l'étrier sur le vitrage ne réclame pas une fixation extrêmement résistante. L'étrier à ce stade ne subit aucun effort autre que celui qu'impose son propre poids. Une fixation légère est donc suffisante momentanément. Cette fixation «instantanée», permet à la colle plus lente à durcir, de parvenir à la fixation finale recherchée sans immobiliser l'installation.

Avantageusement la colle utilisée pour la fixation instantanée, est choisie pour pouvoir être mise en contact avec la colle principale, de telle sorte qu'il ne se forme pas de discontinuité à l'interface. Pour cela l'utilisation de colles de même nature est préférée. C'est le cas lorsque la colle assurant la fixation permanente étant du type polyuréthanne à réaction lente, par exemple la colle commercialisée sous la dénomination "HV" de la société "Gurit", et comme colle rapide, un autre polyuréthanne, par exemple la colle commercialisée par la société "3M" sous le nom "TS 230".

La colle instantanée n'est appliquée de préférence que sur une partie limitée de la zone de collage. Elle ne dépasse pas normalement 20% de cette zone, et de préférence est de l'ordre de 10%.

Dans un autre mode de réalisation, les écarts de conformation du vitrage par rapport à la forme idéale, sont rattrapés sans que la feuille soit équipée à proprement parler d'un étrier. C'est le cas lorsque le mécanisme de levage, autrement dit, le curseur mobile, est fixé sur le vitrage par l'intermédiaire d'un élément de fixation qui nécessite, la présence d'un ou plusieurs trous dans lesquels sont engagés des rivets, vis, ou analogues. Par commodité on désigne cet élément de fixation comme étant une platine.

La figure 10 propose une manière pour conduire aux ajustements permettant le rattrapage des écarts de forme au moyen d'une platine 45 fixée préalablement au vitrage 1, par exemple par collage, ou par tout autre moyen usuel.

Dans le mode présenté à la figure 10, la platine 45 collée sur le vitrage est percée d'un trou 46 pour permettre le passage d'un moyen de fixation au curseur.

La platine 45, qui sert d'appui au curseur, ou à un élément intermédiaire solidaire du curseur, est constituée dans un matériau qui permet un usinage tel que celui décrit précédemment à propos des étriers. Comme précédemment le vitrage, préalablement muni de la platine 45, fait l'objet d'un ajustement sur un banc du type de celui présenté aux figures 3 et 4.

La face de la platine est ainsi représentée après usinage avec un profil en «coin». La figure exagère le type de modification obtenu à partir d'une platine d'épaisseur égale sur toute sa surface, pour illustrer de façon plus claire le type de modification visé selon l'invention.

La platine, ou tout autre élément jouant ce rôle, peut encore être formée directement sur le bord du vitrage, par moulage d'un matériau adéquat. Le choix du matériau, dans ce cas, est déterminé non seulement en raison de son aptitude au moulage, de ses caractéristiques mécaniques garantissant un assemblage rigide aux moyens de levage, mais encore par ses propriétés d'adhérence au vitrage.

Si l'on procède à ce moulage direct sur le vitrage, il est possible de poursuivre l'ajustement de l'élément formé par des opérations d'usinage telles que celles décrites précédemment à propos des étriers et des platines. Ces opérations sont bien évidemment conduites après que le matériau de moulage soit solidifié. Par ailleurs l'ajustement peut aussi résulter d'un positionnement précis du moule utilisé par rapport au bord du vitrage.

La formation de l'élément moulé sur le vitrage peut nécessiter un temps relativement long jusqu'à solidification complète. Dans ce cas, pour éviter l'immobilisation du vitrage sur l'aire de moulage, on peut utiliser comme moule, des coquilles qui une fois le matériau injecté, suivent le vitrage sur une aire d'entreposage. Les coquilles sont soit conservées, et constituent avec le matériau moulé l'élément recherché, soit éliminées pour ne conserver que le matériau moulé.

## Revendications

1. Vitrage mobile de véhicule, précisément positionné par rapport à la carrosserie du véhicule à partir des éléments solidaires du vitrage, fixés aux moyens de mobilisation du vitrage, lesquels sont rigidement attachés à ladite carrosserie, l'ajustement de la position du vitrage résultant d'un ajustement préalable à sa mise en place sur la carrosserie, de la géométrie des éléments solidaires du vitrage, dans lequel ces éléments comprennent au moins un étrier (7, 8) chevauchant le vitrage ou une platine (45), sur un bord du vitrage (1), la partie de l'étrier ou de la platine constituant l'appui de fixation (38, 45) aux moyens de mobilisation (20) étant ajustée pour parvenir aux cotes nominales.

2. Vitrage selon la revendication 1 dans lequel les étriers (7, 8) ou platines (45), sont collés de manière rigide sur le vitrage (1) avant ajustement de l'appui de fixation (38, 45).

3. Vitrage selon la revendication 2 dans lequel l'étrier (7, 8) comporte une patte (29) pourvue d'un bossage (40) servant d'appui aux moyens de levage, l'ajustement étant réalisé sur la hauteur du bossage.

4. Vitrage selon la revendication 2 dans lequel l'étrier comporte une patte (29) dans laquelle s'insère un élément rapporté (41, 43) servant d'appui aux moyens de levage, la position dudit élément étant réglable en hauteur par rapport à la patte de l'étrier.

5. Vitrage selon l'une des revendications précédentes dans lequel les éléments solidaires du vitrage, sont collés à celui-ci, le collage comprenant la mise en oeuvre d'au moins une colle à prise rapide.

## Claims

1. Movable glazing for a vehicle that is accurately positioned in relation to the body of the vehicle by way of integral elements of the glazing secured to the displacing means for the glazing, which are rigidly attached to said vehicle body, wherein the adjustment of position of the glazing results from an adjustment prior to it being positioned on the body of the geometry of the integral elements of the glazing, in which these elements comprise at least one clamp (7, 8) engaging on the glazing or a bar (45) on an edge of the glazing (1), the section of the clamp or the bar forming the attachment support (38, 45) to the displacing means (20) being adjusted to arrive at nominal sizes.

2. Glazing according to Claim 1, wherein the clamps (7, 8) or bars (45) are rigidly glued to the glazing (1) before adjustment of the attachment support (38, 45).

3. Glazing according to Claim 2, wherein the clamp (7, 8) comprises a lug (29) provided with a projection (40) serving as support for the lifting means, the adjustment being performed to the level of the projection.

4. Glazing according to Claim 2, wherein the clamp comprises a lug (29), into which an attached element (41, 43) serving as support for the lifting means is inserted, the position of said element being adjustable in height in relation to the lug of the clamp.

5. Glazing according to one of the preceding claims, wherein the integral elements of the glazing are glued thereto, the gluing comprising the use of at least one quick-setting glue.

## Patentansprüche

1. Bewegliche Scheibe für ein Fahrzeug, die präzise in bezug auf die Karosserie des Fahrzeugs ausgehend von mit der Scheibe bzw. Verglasung einstückigen bzw. verbundenen Elementen positioniert ist, die an Bewegungsmitteln der Scheibe festgelegt sind, welche starr an der Karosserie befestigt sind, wobei die Positionseinstellung der Scheibe aus einer vorhergehenden Einstellung beim Anordnen bzw. Montage auf der Karosserie der Geometrie der mit den Scheibe einstückigen Elementen resultiert, in welcher diese Elemente wenigstens einen die Scheibe überlappenden Bügel bzw. Klemme bzw. Gabel (7, 8) oder eine Platine bzw. Platte (45) und zwar auf einem Rand der Scheibe (1) umfassen, wobei das Teil des Bügels oder der Platine, welches den Festlegungs- bzw. Befestigungsanschlag bzw. -träger (38, 45) für die Bewegungsmittel (20) ausbildet, eingestellt ist, um die Nennwerte zu erreichen.

2. Scheibe nach Anspruch 1, in welcher die Bügel (7, 8) oder Platinen (45) in steifer bzw. starrer Weise auf die Scheibe (1) vor einer Einstellung des Festlegungsanschlags (38, 45) verklebt sind.

3. Scheibe nach Anspruch 2, in welcher der Bügel (7, 8) eine Klaue bzw. Klammer (29) umfaßt, die mit einem Wulst bzw. einer Erhebung (40) versehen ist, welche(r) als Anschlag für Hebemittel dient, wobei die Einstellung auf der Höhe des Wulstes ausgebildet ist.

4. Scheibe nach Anspruch 2, in welcher der Bügel eine Klaue bzw. Klammer (29) umfaßt, in welche ein zugehöriges bzw. zugefügtes Element (41, 43) eingesetzt ist, welches als Anschlag für Hebemittel dient, wobei die Position des Elements in der Höhe in bezug auf die Klaue des Bügels regulierbar ist.

5. Scheibe nach einem der vorhergehenden Ansprüche, in welcher die mit der Scheibe einstückigen Elemente mit dieser verklebt sind, wobei die Verklebung den Einsatz wenigstens eines schnell abbindenden Kleber umfaßt.
